# EUROPÄISCHE PATENTSCHRIFT

(11) **EP 2 746 431 B1**
(45) Veröffentlichungstag und Bekanntmachung des Hinweises auf die Patenterteilung: **21.02.2018**
(21) Anmeldenummer: 13197921.3
(22) Anmeldetag: 18.12.2013
(51) Int. Cl.: C25D 11/16, C25D 11/24, D06F 75/20, D06F 75/38, C25D 11/02

(54) **VERFAHREN ZUM HERSTELLEN EINER SOHLE, BÜGELEISENSOHLE UND BÜGELEISEN**
METHOD FOR PRODUCING A BASE, SMOOTHING IRON BASE AND SMOOTHING IRON
PROCÉDÉ DE FABRICATION D'UNE SEMELLE, SEMELLE DE FER À REPASSER ET FER À REPASSER

(30) Priorität: 21.12.2012 ES 201231994; 12.02.2013 DE 102013202246
(43) Veröffentlichungstag der Anmeldung: 25.06.2014
(73) Patentinhaber: BSH Hausgeräte GmbH, 81739 München (DE)
(72) Erfinder: Villate Robles, Ander, 01006 Vitoria (ES)

(56) Entgegenhaltungen:
- WO-A1-2012/137124
- WO-A2-2012/122300
- DE-A1-102004 062 690
- DE-T2- 60 036 078
- JP-A- H06 256 993

## Beschreibung

Die Erfindung betrifft ein Verfahren zur Herstellung eines Bügeleisens mit einer Sohle, die gleitflächenseitig mit Markierungen aufweist, sowie ein Bügeleisen mit einer Bügeleisensohle.

Bügeleisen haben gewöhnlich eine Aluminiumsohle mit einer beschichten Gleitfläche. Die Beschichtung ist bspw. eine mittels Anodisierens erzeugte Oxidschicht, die die Sohle vor Beschädigungen schützt. Meistens sind die Bügeleisensohlen zudem mit Markierungen in Form von beispielsweise Längsstreifen, Herstellnamen und dergleichen versehen. Bekannte Markierungen werden nach dem Auftragen der Beschichtung ausgebildet. Hierzu wird ein Laserstrahl über die Beschichtung geführt, mittels dem die Beschichtung bereichsweise oberflächenseitig verändert wird. Da die Markierungen lediglich in die Beschichtung eingebracht werden, können verhältnismäßig leistungsschwache Laser verwendet bzw. die Markierungen schnell erzeugt werden. Trotzdem stellen die Markierungen eine Beschädigung der Beschichtung dar, so dass die Gleitfläche an den Markierungen beschichtungsfrei ist und somit an den Markierungen vor Beschädigungen nicht geschützt ist. Zudem hat die Gleitfläche durch die partielle Abtragung der Beschichtung keine einheitliche Oberflächenbeschaffenheit, was sich negativ auf die Bügelqualität auswirkt.

In der WO 2012/137124 A1 wird ein Verfahren für die Herstellung einer Bügeleisensohle, beschrieben, das folgende Schritte umfasst: das Aufbringen einer Grafik aus Einbrennlack auf einem Teil einer Aluminiumoberfläche der Sohle, deren Oberfläche dazu vorgesehen ist, beim Bügeln über die zu bügelnden Stoffen zu gleiten; Brennen der Bügeleisensohle um den Einbrennlack zu härten und Eloxieren der Aluminiumoberfläche, die mit der Grafik aus Einbrennlack versehen ist, um die Oberflächenhärte des nicht mit dem Einbrennlack versehenen Aluminiums zu erhöhen.

In der DE 10 2004 062 690 A1 wird eine Bügelplatte in Form einer Bügeleisensohle oder Bügelmulde mit einem Plattenkörper beschrieben, welcher eine Bügelseite aufweist, wobei der Plattenkörper aus einem Aluminiumwerkstoff besteht und wobei der Plattenkörper aus einem Walzblech gefertigt und zumindest auf der Bügelseite eine Hartstoffschicht in Form einer elektrochemischen Anodisierschicht aufweist, welche gegebenenfalls mit einer Gleitschicht versehen ist und die Bügeloberfläche des Plattenkörpers bereitstellt. Um eine verbesserte mit erhöhte Kratzfestigkeit oder zumindest optisch geringere Wahrnehmbarkeit von Kratzern oder anderen Einflüssen sowie mit einer erhöhten Korrosionsbeständigkeit und längeren Lebensdauer bereitzustellen ist vorgeschlagen, in Mikroporen der Anodisierschicht Farbstoffe zur äußerlich wahrnehmbaren Einfärbung der Bügelseite einzulagern. Dazu weist die Bügelfläche eine makroskopische Rauheit in Form von unregelmäßigen Erhebungen und Vertiefungen auf, wobei die Erhebungen nichtisometrisch sind und eine langgestreckte Form aufweisen. Vorzugsweise ist der Farbstoff in den Mikroporen durch ein eingelagertes Fixiermittel fixiert.

In der DE 195 09 497 C1 wird ein Verfahren zur Herstellung einer Oberflächenstruktur auf einer Bügeleisensohle beschrieben. Hierbei wird auf die Bügeleisensohle (durch Anodisieren) eine Eloxalschicht aufgebracht, welche anschließend in Teilbereichen durch Laserbehandlung mindestens teilweise wieder abgetragen wird.

In der DE 600 36 078 T2 wird ein Verfahren zur Markierung einer anodisierten Schicht eines Aluminiumgegenstandes beschrieben. Hierzu wir eine anodisierte Außenschicht mit Laserstrahlen behandelt, um so die visuellen Eigenschaften der Oberfläche zu ändern.

In der KR 10 2010 0 091 538 A wird ferner ein Verfahren zur Herstellung eines Kochgeschirrs beschrieben. Ziel ist die Verbesserung der ästhetischen Eigenschaften des Kochgeschirrs. Hierzu wird die Oberfläche des aus Aluminium bestehenden Kochgeschirrs zunächst zwecks Herstellung von Mustern teilweise mit Laserstrahlen behandelt. Anschließend wird die gesamte Oberfläche anodisiert.

In der JP H06 - 256 993 A wird die Herstellung von dekorativen Elementen beschrieben. Ziel ist die Herstellung von dekorativen Mustern auf dem aus Aluminium bestehenden Gehäuse einer Uhr. Zur Verbesserung der Korrosionsbeständigkeit wird das Gehäuse einer ersten Anodisierung unterzogen. Anschließend werden mittels Laserbestrahlung Muster auf der Oberfläche hergestellt und die gesamte Oberfläche anschließend einer zweiten Anodisierung unterzogen.

Schließlich sei noch auf die WO 2012/122300 A2 verwiesen, in welcher eloxierte galvanisierte Aluminiumstrukturen und ein Verfahren zu ihrer Herstellung beschrieben sind.

Aufgabe der Erfindung ist es, ein Verfahren zur Herstellung eines Bügeleisens mit einer Sohle für ein Bügeleisen wie Kleiderbügeleisen, Glätteisen für Haare und dergleichen zu schaffen, deren mit Markierungen versehene Gleitfläche vor Beschädigungen geschützt ist und welche eine einheitliche Oberflächenbeschaffenheit aufweist, die eine hohe Bügelqualität ermöglicht. Zudem ist es Aufgabe der Erfindung, ein Bügeleisen mit einer Bügeleisensohle für Kleiderbügeleisen, Glätteisen für Haare und dergleichen und ein Bügeleisen mit einer derartigen Sohle zu schaffen.

Diese Aufgabe wird durch ein Verfahren zur Herstellung eines Bügeleisens mit einer Sohle mit den Merkmalen des Patentanspruchs 1 sowie durch ein Bügeleisen mit einer Bügeleisensohle mit den Merkmalen des Patentanspruchs 5 gelöst. Vorteilhafte Aus- und Weiterbildungen, welche einzeln oder in Kombination miteinander einsetzbar sind, sind Gegenstand der jeweils abhängigen Ansprüche.

Erfindungsgemäß werden gleitflächenseitig Materialeigenschaften der Bügeleisensohle in Soll-Bereichen der Markierungen verändert. Dann wird die Gleitfläche anodisiert, wobei die markierten Bereiche bzw. Markierungen und markierungsfreie Flächenabschnitte oberflächig unterschiedlich oxidiert werden. Unter den "Soll-Bereichen der Markierungen" soll der markierte Flächenabschnitt oder markierte Bereich verstanden werden. Ebenso sind die "markierungsfreien Flächenabschnitte" die markierungsfreien oder nicht markierten Soll-Bereiche.

Durch das Anodisieren entsteht auf der Bügeleisensohle, die beispielweise aus einer Leichtmetalllegierung oder einem Leichtmetall wie Aluminium besteht, eine Oxidschicht als anodische Beschichtung, die sich sowohl über die Markierungen als auch über die markierungsfreien Flächenabschnitte erstreckt. Die Gleitfläche mit der durchgehenden Beschichtung hat eine einheitliche Oberflächenbeschaffenheit, was sich positiv auf die Bügelqualität auswirkt. Die Markierungen stellen keine Beschädigungen der Beschichtung dar. Die Beschichtung ist über die Gleitfläche geschlossen. Somit ist die Gleitfläche auch im Bereich der Markierungen zuverlässig vor Beschädigungen geschützt. Beim Anodisieren wird die Bügeleisensohle für eine bestimmte Zeit bevorzugterweise in ein Säurebad eingelegt, wobei unter anderem in Abhängigkeit von der Tauchzeit die Dicke der Oxidschicht sowie die resultierende Farbe der Sohle variiert. Je nach ihrer Schichtdicke und Härte kann so allein über die Beschichtung ein individueller optischer Effekt eingestellt werden.

Dadurch, dass die Markierungen als Bereiche mit veränderten Materialeigenschaften ausgebildet werden, wirkt das Anodisieren in diesen Bereichen anders als in den markierungsfreien Flächenabschnitten. Während des Anodisierensschritts wird ein Teil des Materials der Sohle im Bereich der Markierungen entfernt. Somit können Markierungen ausgebildet werden, die aus der Gleitfläche hervorstehen, die gegenüber der Gleitfläche zurückgesetzt sind oder die in die Gleitfläche eingeebnet sind bzw. mit dieser bündig abschließen. Hierdurch lassen sich durch die Tiefe bzw. Höhe der Markierungen unterschiedliche optische Reflexionseffekte, bspw. verschiedene Farben, erzielen.

Bevorzugterweise werden die Materialeigenschaften durch elektromagnetische Strahlung eingestellt. Die elektromagnetische Strahlung wird erfindungsgemäß mittels eines Lasers erzeugt und erlaubt eine präzise Einstellung, insbesondere auch hinsichtlich der Geometrie. Die Strahlung bzw. der Laserstrahl kann flexibel über die Gleitfläche geführt werden, so dass die Markierungen zudem hoch komplexe Verläufe haben können. Zudem kann jede Markierung durch den jeweiligen Laserstrahl derart bearbeitet werden, dass sie sich farblich von den sonstigen Markierungen und/oder von markierungsfreien Gleitflächenbereichen absetzen. Der markierte Sohlenbereich ist teilweise verkohlt (oder verbrannt) oder verkohlt und aufgeweicht ("*annealing*")*.* Beim Anodisieren wird dann ein Teil des verkohlten Materials abgetragen, da das verkohlte Material der Markierungen schwächer ist als nicht mit Laser markiertes Material. Durch eine Modifizierung der Laserparameter wie Art, Leistung, Vorschub, Frequenz, Linienabstand, *internal laser defocusing* können verschieden Farbeffekte erzielt werden.

Beispielsweise wird die Laserbehandlung mittels eines UV-Laser, eines IR-Laser oder eines Grünlichtlaser durchgeführt.

Die anodische Schicht bzw. Beschichtung ist eine poröse Oxidstruktur und kann einer Behandlung zur Abschaffung ihrer absorbierenden Eigenschaft unterzogen werden, welche die chemische und farbliche Stabilität vor Sonnenlicht gewährleistet, da, wenn dies nicht ausgeführt wird, die Färbung im Laufe der Zeit abgehen oder sich beim Kontakt mit einem anderen flüssigen Mittel beflecken wird. Die Bügeleisensohle wird daher bevorzugterweise mittels eines Abdichtungsvorgang abgedichtet. Beispielsweise kann die Sohle für 2-3 Minuten in kochendes (100°C) destilliertes Wasser eingetaucht werden. Dadurch wird erreicht, dass die Poren der anodischen Schicht durch einen hydrothermalen Vorgang geschlossen werden, so dass Angriffe oder Modifizierungen derselben durch externe Mittel vermieden werden.

Ein erfindungsgemäßes Bügeleisen mit einer Bügeleisensohle für ein Kleiderbügeleisen, Glätteisen für Haare und dergleichen, die nach dem erfindungsgemäßen Verfahren hergestellt ist, hat eine mit einer anodischen Beschichtung versehene Gleitfläche, wobei die Bügeleisensohle Markierungen hat, die von Sohlenbereichen gebildet sind, die andere Materialeigenschaften als markierungsfreie Flächenabschnitte aufweisen und von der Beschichtung bedeckt sind, wobei die Markierungen gegenüber den markierungsfreien Flächenabschnitten optisch oder geometrisch abgesetzt sind. Ein derartiges Bügeleisen zeichnet sich durch eine mit Markierungen versehene Gleitfläche aus, die zuverlässig vor Beschädigungen geschützt ist, eine einheitliche Oberflächenbeschaffenheit aufweist, eine hohe Bügelqualität ermöglicht und unterschiedliche optische Reflexionen zeigt.

In Abhängigkeit vom zum Beispiel, Sohlenmaterial, Bestrahlungsparametern und Anodisierungsparamtern können die Markierungen gegenüber den markierungsfreien Flächenabschnitten zurückgesetzt sein, über die markierungsfreien Flächenabschnitte hervorstehen und/oder in die Gleitfläche eingeebnet sein bzw. bündig mit den markierungsfreien Flächenabschnitten abschließen. Das Zurücksetzen der Markierungen oder das Einebnen der Markierungen wirkt sich beispielsweise positiv auf die Bügelqualität aus, da die Gleitfläche keine vorstehende Sohlenkontur aufweist. Durch das Hervorstehen der Markierungen können beispielsweise wirkungsvolle optische Effekte erzielt werden.

Ein bevorzugtes Bügeleisen ist mit einer erfindungsgemäßen Bügeleisensohle versehen und zeichnet sich durch eine hohe Bügelqualität und durch optische Effekte aus.

Die Erfindung eignet sich insbesondere zur Bereitstellung eines Bügeleisens wie ein Kleiderbügeleisen, Glätteisen für Haare und dergleichen, deren Sohle eine mit Markierungen versehene Gleitfläche aufweist, die zuverlässig vor Beschädigungen geschützt ist, eine einheitliche Oberflächenbeschaffenheit aufweist, eine hohe Bügelqualität ermöglicht und unterschiedliche optische Reflexionen zeigt.

Im Folgenden werden bevorzugte Ausführungsbeispiele der Erfindung anhand schematischer Darstellungen näher erläutert. Es zeigen:
- Fig. 1: eine Draufsicht auf eine Gleitfläche einer Bügeleisensohle, die nach einem erfindungsgemäßen Verfahren hergestellt wurde;
- Fig. 2: einen Teilschnitt entlang der Linie A-A der Bügeleisensohle; und
- Fig. 3: einen erfindungsgemäßen Verfahrensschritt zur Herstellung einer erfindungsgemäßen Bügeleisensohle.

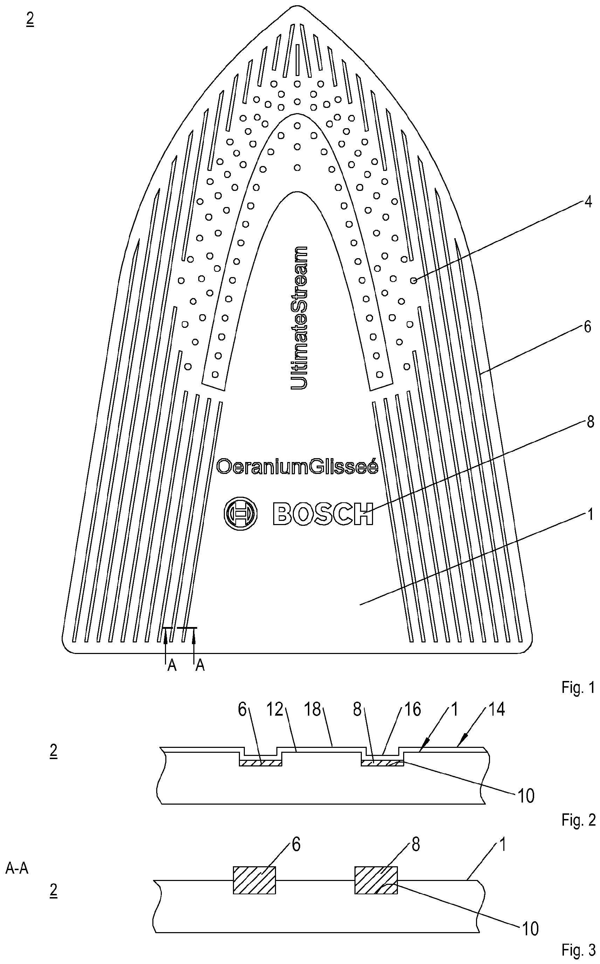

In Fig. 1 ist eine Draufsicht einer Gleitfläche 1 einer Bügeleisensohle bzw. Sohle 2 eines erfindungsgemäßen Bügeleisens. Die Bügeleisensohle 2 ist in dem gezeigten Ausführungsbeispiel eine Sohle 2 eines Kleiderbügeleisens. Allerdings kann die Bügeleisensohle 2 bei entsprechender Geometrieänderung auch die Sohle eines Glätteisens für Haare sein. Der Begriff Bügeleisensohle ist somit nicht auf Kleiderbügeleisen beschränkt, sondern erstreckt sich zum Beispiel auch auf Haarglätter.

Die Sohle 2 besteht bevorzugterweise aus Aluminium bzw. einer Aluminiumlegierung. Beim Bügeln mit der Gleitfläche 1 kommt sie gleitend in Berührung mit einer zu bügelnden Kleidung. Im gezeigten Ausführungsbeispiel hat die Sohle 2 eine Vielzahl von Dampfaustrittsöffnungen 4.

Zudem weist die Sohle 2 eine Vielzahl von gleitflächenseitigen Markierungen 6, 8 auf. Die Markierungen 6, 8 sind beispielsweise sich in Längsrichtung der Sohle 2 erstreckende Linien bzw. Längsstreifen 6 oder Schriftzüge 8, die beispielsweise den Herstellernamen wiedergeben. Die Markierungen 6, 8 sind in Vertiefungen 10 (s. Fig. 2) der Sohle 2 angeordnet, die neben unterschiedlichen Verläufen auch unterschiedliche Tiefen haben können. Die Markierungen 6, 8 haben in dem gezeigten Ausführungsbeispiel eine Dicke, die kleiner ist als die Tiefe der jeweiligen Vertiefung 10, so dass die Markierungen 6, 8 gegenüber benachbarten markierungsfreien Flächenabschnitten 12 zurückgesetzt sind.

Wie im Teilschnitt in Fig. 2 gezeigt, ist die Sohle 2 mit einer Beschichtung 14 versehen. Die Beschichtung 14 erstreckt sich über die gesamte Gleitfläche 1 und somit sowohl über die Markierungen 6, 8, als auch über markierungsfreie Flächenabschnitte 12 der Gleitfläche 1. Die Beschichtung 14 ist eine Oxidschicht, mit einer einheitlichen bestimmten Dicke und Härte. Aufgrund der in diesem Ausführungsbeispiel zurückgestuften Anordnung der Markierungen 6, 8 sind Beschichtungsabschnitte 16, die die Markierungen 6, 8 bedecken, gegenüber benachbarten Beschichtungsabschnitten 18, die die markierungsfreien Flächenabschnitt 12 bedecken, ebenfalls zurückgestuft. Wie zeichnerisch dargestellt, sind sie in dem hier gezeigten Ausführungsbeispiel um das gleiche Maß wie die Markierungen 6, 8 zurückgesetzt.

Wie in Fig. 3 gezeigt, werden zur Herstellung der Sohle 2 in einem ersten Schritt Materialeigenschaften der Sohle 2 in Soll-Bereichen der Markierungen 6, 8 gegenüber benachbarten markierungsfreien Flächenabschnitten 12 geändert. Die Veränderung der Materialeigenschaften erfolgt bevorzugterweise durch elektromagnetische Strahlung im Rahmen einer Laserbehandlung, bevorzugterweise mittels eines gepulsten UV-Lasers. Dabei wird ein Laserstrahl derart eingestellt, dass die Sohle 2 in den markierten Bereichen verbrannt (verkohlt oder verkohlt und durch annealing aufgeweicht) wird. Die Markierungen 6, 8 stellen somit in dem hier gezeigten Ausführungsbeispiele verbrannte Sohlenbereiche dar, die sich in die Sohle 2 hinein- und gleichzeitig über die Gleitfläche 1 hinaus erstrecken. Als Zwischenergebnis erstrecken sich die Markierungen 6, 8 somit aus einer Vertiefung 10 über die Gleitfläche 1 hinaus.

Anschließend wird in einem zweiten Schritt die Beschichtung 14 aufgebracht (vgl. Fig. 2). Hierzu wird die Sohle 2 einer anodisierenden Tauchbadbehandlung unterzogen. Dabei wirkt sich das Anodisieren stärker auf die Markierungen 6, 8 aus als auf die markierungsfreien Flächenabschnitte 12, so dass die Markierungen 6, 8 und die markierungsfreie Flächenabschnitte 12 oberflächig unterschiedlich abgetragen werden. In dem gezeigten Ausführungsbeispiel werden die Markierungen 6, 8 oberflächenseitig derart abgetragen, dass sie als Endergebnis gegenüber den benachbarten Flächenabschnitten 12 zurückgesetzt und somit vollständig in den Vertiefungen 10 aufgenommen sind. Gleichzeitig bildet sich auf den Markierungen 6, 8 und auf den markierungsfreien Flächenabschnitten 12 die Beschichtung 14 mit einer konstanten einheitlichen Schicht aus, die je nach dem Abschnitt anders aussieht. In Abhängigkeit von den verwendeten Laserparametern werden die Lasermarkierungen nach dem Anodisierungsbad in größerem oder geringerem Ausmaß entfernt. Da die markierte Aluminiumstruktur 6, 8 anders ist als diejenige von nicht markiertem Aluminium 12, ist der ästhetische Anodisierungseffekt verschieden, wobei ein farbiger Unterschied zwischen den markierten Zonen 6, 8 und den nicht markierten Zonen 12 erzeugt wird.

Da die anodische Beschichtung 14 eine poröse Oxidstruktur ist, wird sie bevorzugterweise abschließend einer Abdichtungsbehandlung unterzogen. Hierzu wird die Bügeleisensohle 2 beispielsweise für 2-3 Minuten in kochendes (100°C) destilliertes Wasser eingetaucht. Dadurch wird erreicht, dass die Poren der anodischen Beschichtung 14 durch einen hydrothermalen Vorgang geschlossen werden, so dass Angriffe oder Modifizierungen derselben durch externe Mittel vermieden werden.

Folglich ist die Gleitfläche 1 mit Markierungen 6, 8 versehen, die in Vertiefungen 10 der Sohle 2 angeordnet und gegenüber markierungsfreien Flächenabschnitten 12 optisch und oder geometrisch abgesetzt sind und zusammen mit den markierungsfreien Flächenabschnitten 12 mit einer durchgehenden anodischen Beschichtung 14 versehen sind. Die Laserbehandlung und die Tauchbadbehandlung bzw. das Anodisieren sind dabei derart aufeinander abgestimmt, dass beim Anodisieren die Markierungen 6, 8 nur im gewünschten Maße abgetragen werden. In dem hier gezeigten Ausführungsbeispiel sind die Laserbehandlung und die Tauchbadbehandlung derart eingestellt, dass die Markierungen 6, 8 vollständig in den Vertiefungen 10 aufgenommen und somit gegenüber der Gleitfläche 1 zurückgesetzt sind.

Beispielhafte Verfahrensparameter sind in der folgenden Tabelle angeben. Diese stellen jedoch keine Einschränkung des Schutzbereiches der Erfindung dar. Verwendet wurde ein UV -Laser mit einer Leistung von 2 Watt.

| | Beispielvariante 1 | Beispielvariante 2 | Beispielvariante 3 |
|---|---|---|---|
| Leistung [%] | 100 | 95 | 100 |
| Vorschub [mm/s] | 20 | 400 | 1550 |
| Frequenz [KHz] | 25 | 25 | 25 |
| Linienabstand [mm] | 40 | 40 | 30 |
| Internal Laser [mm] Defocusing | 2 | 0 | 0 |

Analog kann der Fachmann andere Kenngrößen sogar für eine andere Art von Laser wie IR-Laser oder Grünlichtlaser finden.

Eine solche Sohle bzw. Bügeleisensohle 2 ist für Kleiderbügeleisen oder jedes Bügeleisen geeignet, bei welchem eine für das Gleiten geeignete oberflächige Qualität nötig ist, wie zum Beispiel Haarglätter bzw. Glätteisen für Haare.

Offenbart ist ein Verfahren zur Herstellung einer Sohle eines Bügeleisens wie ein Kleiderbügeleisen oder ein Glätteisen für Haare, deren Gleitfläche Markierungen aufweist, die gegenüber markierungsfreien Flächenabschnitten optisch und oder geometrisch abgesetzt sind, sowie eine derartige Bügeleisensohle für Kleiderbügeleisen, Glätteisen für Haare und dergleichen und ein Bügeleisen mit einer derartigen Sohle.

### Bezugszeichenliste

- 1: Gleitfläche
- 2: Bügeleisensohle
- 4: Dampflaustrittöffnung
- 6: Linien / Längsstreifen
- 8: Schriftzug
- 10: Vertiefung
- 12: markierungsfreier Flächenabschnitt
- 14: Beschichtung
- 16: Beschichtungsabschnitt
- 18: Beschichtungsabschnitt

## Patentansprüche

1. Verfahren zur Herstellung eines Bügeleisens mit einer Sohle (2), die gleitflächenseitig Markierungen (6, 8) aufweist, mit den Schritten:
- Verändern von Materialeigenschaften der Sohle (2) in Soll-Bereichen der Markierungen (6, 8) mittels elektromagnetischer Strahlung eines Lasers, und
- Anodisieren der Gleitfläche (1) der Sohle (2), wobei die Markierungen (6, 8) und markierungsfreie Flächenabschnitte (12) oberflächig unterschiedlich oxidiert werden.

2. Verfahren nach Anspruch 1, **dadurch gekennzeichnet, dass** während des Anodisierensschritts ein Teil des Materials der Sohle im Bereich der Markierungen entfernt wird.

3. Verfahren nach Anspruch 2, **dadurch gekennzeichnet, dass** als Behandlungslaser ein UV-Laser verwendet wird.

4. Verfahren nach einem der vorhergehenden Ansprüche 1 bis 3, **dadurch gekennzeichnet, dass** die Gleitfläche (1) nach dem Anodisieren einer Abdichtungsbehandlung unterzogen wird.

5. Bügeleisen mit einer Bügeleisensohle (2), mit einer mittels eines Anodisierungsverfahrens erzielten gleitflächenseitigen Beschichtung (14), **dadurch gekennzeichnet, dass** die Bügeleisensohle (2) mittels elektromagnetischer Strahlung eines Lasers erzeugte Markierungen (6, 8) aufweist, die von Sohlenbereichen gebildet sind, die andere Materialeigenschaften als markierungsfreie Flächenabschnitte (12) aufweisen und von der Beschichtung (14) bedeckt sind, wobei die Markierungen (6, 8) gegenüber den markierungsfreien Flächenabschnitten (12) optisch oder geometrisch abgesetzt sind.

6. Bügeleisen nach Anspruch 5, wobei die Markierungen (6, 8) gegenüber den markierungsfreien Flächenabschnitten (12) zurückgesetzt sind.

7. Bügeleisen nach Anspruch 5, wobei die Markierungen (6, 8) über die markierungsfreien Flächenabschnitte (12) hervorstehen.

8. Bügeleisen nach Anspruch 5, wobei die Markierungen (6, 8) eingeebnet sind.

9. Bügeleisen nach Anspruch 5, **dadurch gekennzeichnet, dass** es ein Kleiderbügeleisen ist.

10. Bügeleisen nach Anspruch 5, **dadurch gekennzeichnet, dass** es ein Glätteisen für Haare ist.

## Claims

1. Method for producing an iron with a base (2), which has markings (6, 8) on the sliding surface, with the steps:
- Altering material properties of the base (2) in target regions of the markings (6, 8) by means of electromagnetic radiation of a laser, and
- Anodising the sliding surface (1) of the base (2), wherein the markings (6, 8) and marking-free surface sections (12) are oxidised differently on the surface.

2. Method according to claim 1, **characterised in that** during the anodisation step a part of the material of the base in the region of the markings is removed.

3. Method according to claim 2, **characterised in that** a UV laser is used as the treatment laser.

4. Method according to one of the preceding claims 1 to 3, **characterised in that** the sliding surface (1) undergoes a sealing treatment following the anodisation.

5. Iron with an iron base (2), with a coating (14) on the sliding surface side achieved by means of an anodisation method, **characterised in that** the iron base (2) has markings (6, 8) produced by means of electromagnetic radiation of a laser, which markings are formed by base regions which have different material properties from marking-free surface sections (12) and are covered by the coating (14), wherein the markings (6, 8) are visually or geometrically lowered with respect to the marking-free surface sections (12).

6. Iron according to claim 5, wherein the markings (6, 8) are set back with respect to the marking-free surface sections (12).

7. Iron according to claim 5, wherein the markings (6, 8) protrude beyond the marking-free surface sections (12).

8. Iron according to claim 5, wherein the markings (6, 8) are levelled.

9. Iron according to claim 5, **characterised in that** it is a clothing iron.

10. Iron according to claim 5, **characterised in that** it is a straightening iron for hair.

## Revendications

1. Procédé de fabrication d'un fer à repasser avec une semelle (2) présentant des marquages côté surface de glisse (6, 8), comprenant les étapes suivantes:
- modification des propriétés de matériau de la semelle (2) dans les zones théoriques des marquages (6, 8) au moyen du rayonnement électromagnétique d'un laser, et
- anodisation de la surface de glisse (1) de la semelle (2), les marquages (6, 8) et les sections superficielles sans marquages (12) étant différemment oxydées en surface.

2. Procédé selon la revendication 1, **caractérisé en ce que** pendant l'étape d'anodisation, une partie du matériau de la semelle dans la zone des marquages est éliminée.

3. Procédé selon la revendication 2, **caractérisé en ce qu'**on utilise comme laser de traitement un laser aux UV.

4. Procédé selon l'une des revendications précédentes 1 à 3, **caractérisé en ce que** la surface de glisse (1) est soumise, après l'anodisation, à un traitement d'étanchéification.

5. Fer à repasser avec semelle de fer à repasser (2) dotée d'un revêtement (14) coté surface de glisse réalisé au moyen d'un procédé d'anodisation, **caractérisé en ce que** la semelle du fer à repasser (2) présente des marquages (6, 8) produits au moyen du rayonnement électromagnétique d'un laser, lesquels sont formés par des zones de semelle présentant d'autres propriétés de matériau que les sections superficielles sans marquages (12) et sont recouverts d'un revêtement (14), les marquages (6, 8) étant optiquement ou géométriquement décalés par rapport aux sections superficielles (12) sans marquages.

6. Fer à repasser selon la revendication 5, dans lequel les marquages (6, 8) sont en retrait par rapport aux sections superficielles (12) sans marquages.

7. Fer à repasser selon la revendication 5, dans lequel les marquages (6, 8) dépassent les sections superficielles (12) sans marquages.

8. Fer à repasser selon la revendication 5, dans lequel les marquages (6, 8) affleurent.

9. Fer à repasser selon la revendication 5, **caractérisé en ce qu'**il s'agit d'un fer à repasser pour vêtements.

10. Fer à repasser selon la revendication 5, **caractérisé en ce qu'**il s'agit d'un fer à lisser les cheveux.
